Europäisches Patentamt

European Patent Office

Office européen des brevets

(11) Veröffentlichungsnummer: **0 095 138**
**A1**

(12) # EUROPÄISCHE PATENTANMELDUNG

(21) Anmeldenummer: 83104902.8

(22) Anmeldetag: 18.05.83

(51) Int. Cl.³: **C 08 F 10/00**
**C 08 F 4/64**

(30) Priorität: 21.05.82 DE 3219117

(43) Veröffentlichungstag der Anmeldung:
30.11.83 Patentblatt 83/48

(84) Benannte Vertragsstaaten:
BE DE FR GB IT NL

(71) Anmelder: HOECHST AKTIENGESELLSCHAFT
Postfach 80 03 20
D-6230 Frankfurt am Main 80(DE)

(72) Erfinder: Schäfer, Werner, Dr.
Rosenstrasse 10
D-6238 Hofheim am Taunus(DE)

(72) Erfinder: Rust, Kurt, Dr.
Fasanenstrasse 9
D-6233 Kelkheim (Taunus)(DE)

(54) Verfahren zur Herstellung einer Katalysatorkomponente und ihre Verwendung für die Polymerisation von 1-Olefinen.

(57) Verfahren zur Herstellung einer Katalysatorkomponente und ihre Verwendung für die Polymerisation und Copolymerisation von 1-Olefinen.

Sehr feinteilige Polymerisate mit niedriger Schüttdichte erhält man, wenn die Polymerisation und Copolymerisation von 1-Olefinen mittels einer Katalysatorkomponente durchgeführt wird, die in Weise hergestellt wurde, daß das feste mit einem Kohlenwasserstoff gewaschene Produkt der Umsetzung eines Magensiumalkoholats mit TiCl$_4$ einer Scherbehandlung ausgesetzt wurde.

EP 0 095 138 A1

Croydon Printing Company Ltd.

Verfahren zur Herstellung einer Katalysatorkomponente
und ihre Verwendung für die Polymerisation von 1-Olefinen

Neben der Verarbeitung von Polymeren wie Polyethylen zu Formkörpern durch Spritzguß- oder Extrusionsverfahren sind auch Verfahren bekannt, bei denen die Formgebung durch ein Pulverpreßverfahren erfolgt. Hierbei werden Polyethylenpulver einer mittleren Teilchengröße von weniger als 100 /um bei einer Verteilungsfunktion von weniger als 0,80 bevorzugt verwendet (vergleiche Deutsche Offenlegungsschrift 24 25 396). Die in dieser Anmmeldung verwendeten feinkörnigen Polyethylene werden durch Mahlen von grobkörnigem Polyethylen hergestellt. Ein solches Verfahren ist unwirtschaftlich wegen der großen Mengen zu vermahlenden Produktes.

Es ist auch ein Verfahren bekannt, nach welchem man durch Einwirkung von mechanischen Schwingungen von mindestens 50 Hz auf das Gemisch der Teilnehmer der Reaktion zwischen einer Übergangsmetallverbindung und einer SiH-Bindungen enthaltenden Siliziumverbindung einen Katalysator erhält, der bei der Polymerisation von Olefinen ein besonders feinteiliges Polymerisat mit hoher Schüttdichte ergibt (Deutsche Auslegeschrift 15 45 194).

Schließlich sind auch Ziegler-Katalysatoren zur Polymerisation von Olefinen bekannt, in denen die Schwermetallkomponenten (Komponente A) durch Umsetzung von einfachen oder komplexen Magnesiumalkoholaten mit $TiCl_4$ erhalten werden (Vergleiche Deutsche Patentschriften 17 95 197 und 19 57 679 und Deutsche Offenlegungsschrift 20 00 566). Bei der Verwendung dieser Umsetzungsprodukte zusammen mit Al-organischen Verbindungen (Komponente B) zur Polymerisation von Ethylen werden bei hoher Ausbeute ebenfalls Polymerisate mit hoher Schüttdichte erhalten. Hohe Schüttdichten der Polymerisate sind bei der üblichen Suspensionspolymerisation von Vorteil, da dann mit hohen Feststoffgehalten und entsprechend hohem Ausstoß pro Reaktor gearbeitet werden kann.

Für bestimmte Anwendungen und bei der Pulververarbeitung kann es aber durchaus wünschenswert sein, über Polymerisate mit niedriger Schüttdichte zu verfügen. So kann bei Polymerisatpulvern mit niedriger Schüttdichte bei der Zumischung von Füllstoffen ein höherer Füllgrad und eine bessere Homogenität der Mischung erzielt werden. Ferner sind im Falle der Verarbeitung nach dem Pulverpreßverfahren mit Volumendosierung bei Pulvern, die eine niedrige Schüttdichte besitzen, Formteile, die eine geringere Dickenschwankung aufweisen, leichter herstellbar.

Es bestand somit die Aufgabe, einen Polymerisationskatalysator zu finden, der die Herstellung von Polymerisate mit gezielt eingestellter Pulvermorphologie ermöglicht, wobei neben einer niedrigen Schüttdichte eine möglichst enge Korngrößenverteilung (wenig Staub und wenig Überkorn) angestrebt wird.

Es wurde nun gefunden, daß man das oben angestrebte Ziel dadurch erreicht, daß man spezielle Katalysatoren einer Scherbehandlung aussetzt und so in Abhängigkeit von der Zeitdauer die Morphologie des Polymerpulvers einstellen kann.

Gegenstand der Erfindung ist daher ein Verfahren zur Herstellung einer Katalysatorkomponente für die Polymerisation und Copolymersation von 1-Olefinen dem festen Produkt der Umsetzung von Magnesiumalkoholaten mit $TiCl_4$, dadurch gekennzeichnet, daß das mit einem Kohlenwasserstoff gewaschene feste Umsetzungsprodukt einer Scherbehandlung ausgesetzt wird.

Gegenstand der Erfindung ist ferner die Verwendung dieser Katalysatorkomponente für die Polymerisation von 1-Olefinen zu feinteiligen Polymerisaten mit niedriger Pulverschüttdichte.

Die festen Umsetzungsprodukte von Magnesiumalkoholat mit $TiCl_4$ können auf verschiedene Weise erhalten werden.

So kann man Magnesiumalkoholate in einem einstufigen Verfahren mit $TiCl_4$ umsetzen. Auf 1 Mol Magnesiumalkoholat werden 1 - 5 Mol $TiCl_4$ eingesetzt, vorzugsweise 1,4 - 3,5 Mol $TiCl_4$ auf 1 Mol Magnesiumalkoholat.

Für die Umsetzung empfehlen sich Temperaturen von 0 bis 200°C, vorteilhaft sind Temperaturen von 60 bis 140°C.

Die Umsetzung erfolgt in aliphatischen oder cycloaliphatischen Kohlenwasserstoffen, wie Butan, Pentan, Hexan, Heptan, Cyclohexan, Methylcyclohexan, sowie aromatischen Kohlenwasserstoffen, wie Benzol, Xylol; auch hydrierte Dieselölfraktionen, die sorgfältig von Sauerstoff, Schwefelverbindungen und Feuchtigkeit befreit worden sind, sind brauchbar.

Anschließend wird das in Kohlenwasserstoffen unlösliche Reaktionsprodukt von Magnesiumalkoholat mit $TiCl_4$ durch mehrmalige Wäsche mit einem inerten Lösungsmittel, in dem sich die eingesetzte Titan-IV-Verbindung leicht löst, von nicht umgesetzter Titanverbindung befreit.

Es werden Magnesiumalkoholate der allgemeinen Formel $Mg(OR^1)_2$ verwendet, in der $R^1$ gleiche oder verschiedene Kohlenwasserstoffreste, vorzugsweise geradkettige oder verzweigte Alkylreste mit 1 bis 10 Kohlenstoffatomen bedeutet; bevorzugt werden Magnesiumalkoholate mit Alkylresten von 1 bis 4 Kohlenstoffatomen.

Beispielsweise seien

$Mg(OCH_3)_2$,    $Mg(OC_2H_5)_2$,    $Mg(OC_3H_7)_2$,    $Mg(OiC_3H_7)_2$,
$Mg(OC_4H_9)_2$,    $Mg(OiC_4H_9)_2$

genannt.

Die Magnesiumalkoholate lassen sich nach an sich bekannten Methoden, z. B. durch Umsetzung von Magnesium mit Alkoholen, insbesondere einwertigen, alilphatischen Alkoholen, darstellen.

Für die Herstellung der festen Umsetzungsprodukte können auch mehrstufige Verfahren verwendet werden.

1. Die Herstellung des festen Umsetzungsproduktes erfolgt in zwei Reaktionsstufen bei unterschiedlicher Temperatur.

In der ersten Reaktionsstufe wird das Magnesiumalkoholat mit Titantetrachlorid bei einer Temperatur von 50 bis 100°C, vorzugsweise von 60 bis 90°C, in Gegenwart eines inerten Kohlenwasserstoffs unter Rühren umgesetzt. Auf 1 Mol Magnesiumalkoholat werden 1 bis 5 Mol Titantetrachlorid eingesetzt, vorzugsweise 1,4 bis 3,5 Mol Titantetrachlorid auf 1 Mol Magnesiumalkoholat.

Als inerter Kohlenwasserstoff eignet sich ein aliphatischer oder cycloaliphatischer Kohlenwasserstoff wie Butan, Pentan, Hexan, Heptan, Isooctan, Cylclohexan, Methylcyclohexan, sowie ein aromatischer Kohlenwasserstoff wie Toluol, Xylol; auch eine hydrierte Dieselöl- oder Benzinfraktion, die sorgfältig von Sauerstoff, Schwefelverbindungen und Feuchtigkeit befreit worden ist, ist brauchbar.

Die Reaktionsdauer in der ersten Stufe beträgt 0,5 bis 8 Stunden, vorzugsweise 2 bis 6 Stunden.

In der ersten Reaktionssstufe findet ein weitgehender Austausch der Alkoxygruppen des Magnesiumalkoholats mit den Chloratomen des Titantetrachlorids statt. Als Reaktionsprodukt erhält man dabei einen kohlenwasserstoffunlöslichen magnesium- und titanhaltigen Feststoff und kohlenwasserstofflösliche, Chlor und Alkoxygruppen
enthaltende Titanverbindungen.

In der zweiten Reaktionsstufe wird das erhaltene Reaktionsgemisch bei einer Temperatur von 110 bis 200°C,
vorzugsweise 110 bis 160°C unter Rühren einer thermischen Behandlung unterzogen. Während dieser thermischen
Behandlung steigt der Titangehalt des in Kohlenwasserstoffen unlöslichen Feststoffes stark an, und es findet
eine Abspaltung von Alkylchloriden statt. Es wird angenommen, daß die löslichen Titanalkoxychloride unter
Abspaltung von Alkylchloriden in kondensierte Titanate
umgewandelt werden, die in Kohlenwasserstoffen unlöslich
sind und sich auf dem Feststoff niederschlagen. Die
thermische Behandlung wird so lange durchgeführt, bis
keine Alkylchloridabspaltung mehr erfolgt. In der Regel
ist dafür eine Reaktionsdauer von 10 bis 100 h erforderlich.

Anschließend trennt man durch mehrmaliges Waschen mit
einem Kohlenwasserstoff alle löslichen Reaktionsprodukte
ab und erhält einen im Kohlenwasserstoff unlöslichen,
magnesium- und titanhaltigen Feststoff.

2. In einer weiteren Variante erfolgt die Herstellung des
festen Umsetzungsproduktes ebenfalls in zwei Stufen.
Jedoch wird in der zweiten Stufe ein Chloralkoxytitanat
zugesetzt.

Die Umsetzung in der ersten Stufe erfolgt wie oben unter
1. angegeben.

Anschließend wird das in dem Kohlenwasserstoff unlösliche
Reaktionsprodukt von Magnesiumalkoholat mit Titantetrachlorid durch mehrmaliges Waschen mit einem inerten
Kohlenwasserstoff von nicht umgesetzten, löslichen
Titanverbindungen befreit.

Der so erhaltene Feststoff wird wieder in einem Kohlenwasserstoff suspendiert und in einer zweiten Reaktionsstufe bei einer Temperatur von 110 bis 200°C unter Zusatz eines Chloralkoxytitanats einer thermischen Behandlung unterworfen, bis keine Alkylchloridabspaltung mehr erfolgt.

In der Regel ist dafür eine Reaktionsdauer von 1 bis 100 h erforderlich.

Als Chloralkoxyverbindung wird eine solche der Formel $TiCl_n(OR^2)_{4-n}$, worin $R^2$ gleiche oder verschiedene Alkylreste mit 1 bis 20 Kohlenstoffatomen und n = 1 bis 3 bedeuten, verwendet.

Beispiele für geeignete Chloralkoxytitanate sind:

$Ti(OC_2H_5)_3Cl$, $Ti(OC_2H_5)_2Cl_2$, $Ti(OC_2H_5)Cl_3$, $Ti(OC_3H_7)_3Cl$, $Ti(OiC_3H_7)_3Cl$, $Ti(OC_3H_7)_2Cl_2$, $Ti(OiC_3H_7)_2Cl_2$, $Ti(OC_3H_7)Cl_3$, $Ti(OiC_3H_7)Cl_3$, $Ti(OiC_4H_9)_2Cl_2$, $Ti(OC_8H_{17})Cl_3$, $Ti(OC_{16}H_{33})Cl_3$.

Bevorzugt verwendet werden:

$Ti(OC_2H_5)_2Cl_2$, $Ti(OC_2H_5)Cl_3$, $Ti(OC_3H_7)_2Cl_2$, $Ti(OC_3H_7)Cl_3$, $Ti(OiC_3H_7)_2Cl_2$ und $Ti(OiC_3H_7)Cl_3$.

Pro Molteil in der ersten Reaktionsstufe eingesetztes Magnesiumalkoholat werden 0,1 bis 3 Molteile Chloralkoxytitanat eingesetzt.

Anschließend trennt man durch mehrmaliges Waschen mit einem Kohlenwasserstoff alle löslichen Reaktionsprodukte ab und erhält einen im Kohlenwasserstoff unlöslichen, magnesium- und titanhaltigen Feststoff.

3. Bei dieser Variante zur Herstellung des festen Umsetzungsproduktes wird in der zweiten Stufe weiters $TiCl_4$ zugegeben. Die Umsetzung in der ersten Stufe erfolgt auch hier wie oben unter 1. angegeben.

Der so erhaltene gewaschene Feststoff wird wieder in einem Kohlenwasserstoff suspendiert und in einer zweiten Reaktionsstufe bei einer Temperatur von 110 bis 200°C, vorzugsweise 110 bis 160°C unter Zusatz von Titantetrachlorid einer thermischen Behandlung unterworfen.

Pro Molteil in der 1. Reaktionsstufe eingesetztes Magnesiumalkoholat werden in der 2. Reaktionsstufe 0,1 bis 3 Molteile vorzugsweise 0,1 bis 2 Molteile $TiCl_4$ eingesetzt.

Anschließend trennt man durch mehrmaliges Waschen mit einem Kohlenwasserstoff alle löslichen Reaktionsprodukte ab und erhält einen im Kohlenwasserstoff unlöslichen, magnesium- und titanhaltigen Feststoff.

Der Titangehalt der festen Umsetzungsprodukte kann im Bereich von 0,1 bis 10 Milli-Grammatom pro Gramm Feststoff liegen; vorzugsweise beträgt er 0,5 bis 10 Milli-Grammatom pro Gramm Feststoff.

Er läßt sich durch die Reaktionsdauer, die Reaktionstemperatur und die Konzentration der eingesetzten vierwertigen, halogenhaltigen Titanverbindung beeinflussen.

Die so erhaltenen Umsetzungsprodukte werden in trockener Form oder in einer Suspension in einem Verdünnungsmittel einer Scherbehandlung ausgesetzt, wobei die Behandlung in Suspension bevorzugt ist. Als Verdünnungsmittel eignen sich die bereits bei der Herstellung der festen Umsetzungsprodukte aus Magnesiumalkoholat und $TiCl_4$ beschriebenen.

Die Menge an Verdünnungsmittel wird so bemessen, daß die Suspension 0,1 - 1,5 Mol Titan enthält. Für diese Scherbehandlung können handelsübliche Mühlen verwendet werden. Z. B. eignen sich durch Schwingmagneten betriebene Schnellmischer mit konische Löcher aufweisenden Rührerplatten, wie sie unter der Bezeichnung "Vibro-Mischer" im Handel sind (vgl. z. B. "Chemie Ingenieur Technik", 22. Jahrgang, 1950, S. 300); ferner Kreiselmischer, die einen festen käfig- bzw. topfförmigen Widerstands-Elementenkranz (Stator) aufweisen, in dem der von beiden Seiten ansaugende, mit Schaufeln besetzte Mischkreisel (Rotor) untergebracht ist. Derartige Kreiselmischer sind z. B. in den deutschen Patentschriften 8 21 200 und 9 67 436, der deutschen Auslegeschrift 10 34 149 und in Dechema-Monographien, Bd. XIX, S. 72 bis 79, beschrieben und im Handel z. B. unter den geschützten Warenzeichen "Supraton-Mühle", "Kotthoff-Mischsirene" und "Ultra-Turrax" erhältlich.

Es können auch die üblichen Kugelmühlen oder Vibrationsmühlen des Typs "Vibraton", hergestellt von N.V. TEMA'S Gravenhagen Niederlande, verwendet werden. Die Mahldauer beträgt je nach Mühlentyp 5 Minuten bis 10 Stunden.

Zur Polymerisation wird die so erhaltene Katalysatorkomponente (Komponente A) mit einer metallorganischen Verbindung der Gruppen I bis III des Periodensystems (Komponente B) zusammengebracht.

Vorzugsweise verwendet man als Komponente B aluminiumorganische Verbindungen. Als aluminiumorganische Verbindungen eignen sich chlorhaltige aluminiumorganische Verbindungen, die Dialkylaluminiummonochloride der Formel $R_2^3AlCl$ oder Alkylaluminiumsesquichloride der Formel $R_3^3Al_2Cl_3$, worin $R^3$ gleiche oder verschiedene Alkylreste mit 1 bis 16 Kohlenstoffatomen sein kann. Als Beispiele seien genannt:

$$(C_2H_5)_2AlCl, \quad (iC_4H_9)_2AlCl, \quad (C_2H_5)_3Al_2Cl_3.$$

Besonders bevorzugt werden als aluminiumorganische Verbindungen chlorfreie Verbindungen eingesetzt. Hierfür eignen sich einerseits die Umsetzungsprodukte von Aluminiumtrialkylen oder Aluminiumdialkylhydriden mit Kohlenwasserstoffresten mit 1 bis 6 Kohlenstoffatomen, vorzugsweise $Al(iC_4H_9)_3$ oder $Al(iC_4H_9)_2H$, mit 4 bis 20 Kohlenstoffatome enthaltenden Diolefinen, vorzugsweise Isopren. Beispielsweise sei Aluminiumisoprenyl genannt.

Andererseits eignen sich als solche chlorfreie aluminiumorganische Verbindungen Aluminiumtrialkyle $AlR_3^3$ oder Aluminiumdialkylhydride der Formel $AlR_2^3H$, in denen $R^3$ gleiche oder verschiedene Alkylreste mit 1 bis 16 Kohlenstoffatomen bedeutet. Beispiele sind

$Al(C_2H_5)_3$, $Al(C_2H_5)_2H$, $Al(C_3H_7)_3$, $Al(C_3H_7)_2H$,

$Al(iC_4H_9)_3$, $Al(iC_4H_9)_2H$, $Al(C_8H_{17})_3$, $Al(C_{12}H_{25})_3$,

$Al(C_2H_5)(C_{12}H_{25})_2$, $Al(iC_4H_9)(C_{12}H_{25})_2$.

Es können auch Mischungen von metallorganischen Verbindungen der I. bis III. Gruppe des Periodensystems, insbesondere Mischungen verschiedener aluminiumorganischer Verbindungen eingesetzt werden.

Beispielsweise seien folgende Mischungen genannt:

$Al(C_2H_5)_3$ und $Al(iC_4H_9)_3$, $Al(C_2H_5)_2Cl$ und $Al(C_8H_{17})_3$,

$Al(C_2H_5)_3$ und $Al(C_8H_{17})_3$, $Al(C_4H_9)_2H$ und $Al(C_8H_{17})_3$,

$Al(iC_4H_9)_3$ und $Al(C_8H_{17})_3$, $Al(C_2H_5)_3$ und $Al(C_{12}H_{25})_3$,

$Al(iC_4H_9)_3$ und $Al(C_{12}H_{25})_3$, $Al(C_2H_5)_3$ und $Al(C_{16}H_{33})_3$,

$Al(C_3H_7)_3$ und $Al(C_{18}H_{37})_2(iC_4H_9)$, $Al(C_2H_5)_3$ und

Aluminiumisoprenyl (Umsetzungsprodukt von Isopren mit

$Al(iC_4H_9)_3$ oder $Al(iC_4H_9)_2H$.

Das Mischen der Komponente A und der Komponente B kann vor der Polymerisation in einem Rührkessel bei einer Temperatur von -30°C bis 150C, vorzugsweise -10 bis 120°C erfolgen. Es ist auch möglich, die beiden Komponenten direkt im Polymerisationskessel bei einer Polymerisationstemperatur von 20 bis 200°C zu vereinigen. Die Zugabe der Komponente B kann jedoch auch in zwei Schritten erfolgen, indem vor der Polymerisationsreaktion die Komponente A mit einem Teil der Komponente B bei einer Temperatur von -30°C bis 150°C voraktiviert wird und die weitere Zugabe der Komponente B in dem Polymerisationsreaktor bei einer Temperatur von 20 bis 200°C erfolgt.

Der erfindungsgemäß zu verwendende Polymerisationskatalysator wird zur Polymerisation von 1-Olefinen der Formel $R^4CH=CH_2$, in der $R^4$ Wasserstoff oder einen Alkylrest mit 1 bis 10 Kohlenstoffatomen bedeutet, eingesetzt, beispielsweise Ethylen, Propylen, Buten-(1), Hexen-(1), 4-Methylpenten-(1), Octen-(1). Vorzugsweise wird Ethylen allein oder ein Gemisch von mindestens 70 Gew.-% Ethylen und maximal 30 Gew.-% eines anderen 1-Olefins der obigen Formel polymerisiert. Insbesondere wird Ethylen allein oder ein Gemisch von mindestens 90 Gew.-% Ethylen und maximal 10 Gew.-% eines anderen 1-Olefins der obigen Formel polymerisiert.

Die Polymerisation wird in bekannter Weise in Lösung, in Suspension oder in der Gasphase, kontinuierlich oder diskontinuierlich, ein- oder mehrstufig bei einer Temperatur von 20 bis 200°C, vorzugsweise 50 bis 150°C, durchgeführt. Der Druck beträgt 0,5 bis 50 bar. Bevorzugt ist die Polymerisation in dem technisch besonders interessanten Druckbereich von 5 bis 30 bar.

Dabei wird die Komponente A in einer Konzentration, bezogen auf Titan, von 0,0001 bis 1, vorzugsweise 0,001 bis 0,5 mMol Ti pro Liter Dispergiermittel bzw. pro Liter Reaktorvolumen angewendet. Die metallorganische Verbindung wird in einer Konzentration von 0,1 bis 5 mMol, vorzugsweise 0,5 bis 4 mMol pro Liter Dispergiermittel bzw. pro Liter Reaktorvolumen verwendet. Prinzipiell sind aber auch höhere Konzentrationen möglich.

Die Suspensionspolymerisation wird in einem für das Ziegler-Niederdruckverfahren gebräuchlichen inerten Dispergiermittel durchgeführt, beispielsweise in einem aliphatischen oder cycloaliphatischen Kohlenwasserstoff; als solcher sei beispielsweise Butan, Pentan, Hexan, Heptan, Isooctan, Cyclohexan, Methylcyclohexan genannt. Weiterhin kann eine Benzin- bzw. hydrierte Dieselölfraktion, die sorgfältig von Sauerstoff, Schwefelverbindungen und Feuchtigkeit befreit worden ist, benutzt werden. Das Molekulargewicht des Polymerisats kann in bekannter Weise geregelt werden; vorzugsweise wird dazu Wasserstoff verwendet.

Das erfindungsgemäße Verfahren ergibt infolge der hohen Aktivität des zu verwendenden Katalysators Polymerisate mit sehr geringem Titan- und Halogengehalt und daher äußerst guten Werten im Farbbeständigkeits- und Korrosionstest.

Die erhaltenen Polymerisate eignen sich auf Grund ihrer Feinteiligkeit, engen Kornverteilung und niedrigen Schüttdichte besonders gut zur Verarbeitung nach dem Pulverpreßverfahren. Es war besonders überraschend, daß man durch die Mahlbehandlung des festen Umsetzungsproduktes aus einem Magnesiumalkoholat und $TiCl_4$ eine Katalysatorkomponente (Komponente A) erhält, die bei der Polymerisation von Ethylen zusammen mit metallorganischen Verbindungen ein feinteiliges Polymerisat mit niederer Schüttdichte ergibt. Auf Grund des eingangs geschilderten Standes der Technik war zu erwarten gewesen, daß die Mahlbehandlung des Umsetzungsproduktes zwar zu einem feinteiligen Polymerisat führt, das aber eine hohe Schüttdichte aufweist.

BEISPIELE

Bei den nachfolgenden Beispielen wird zur Kontaktherstellung und zur Polymerisation eine hydrierte Dieselölfraktion mit einem Siedebereich von 130 bis 170°C verwendet.

Der Titangehalt der Katalysatoren wird kolorimetrisch bestimmt (Lit. G.O. Müller, Praktikum der quantitativen chemischen Analyse 4. Auflage (1957) S. 243).

Der Schmelzindex MFI wird nach DIN 53 735 (E) bestimmt.

Die Mw/Mn-Werte werden aus den Fraktionierdaten eines Gelpermeationschromatographen in 1,2,4-Trichlorbenzol als Lösungs- und Elutionsmittel bei 130°C ermittelt.

Die Viskosität VZ wird nach DIN 53 728 Blatt 4 mit einem Ubbelohde-Viskosimeter in Dekahydronaphthalin als Lösungsmittel bestimmt.

Die Bestimmung der Dichte erfolgt nach DIN 53 479, die der Schüttdichte nach DIN 53 468.

### Beispiel 1

#### 1.1 Herstellung der Komponente A

114,3 g Magnisiumethylat werden in einem 3 l-Vierhalskolben, versehen mit Tropftrichter, KPG-Rührer, Rückflußkühler und Thermometer, in 1,5 l Dieselölfraktion unter $N_2$-Überlagerung dispergiert. Zu dieser Dispersion werden bei 120°C innerhalb von 4 Stunden 154 ml = 1,4 Mol $TiCl_4$ dosiert. Nach der $TiCl_4$-Zugabe wird noch weitere 60 Stunden bei 120°C gerührt. Zum Abtreiben gasförmiger Reaktionsprodukte wird während der gesamten Reaktionszeit ein schwacher $N_2$-Strom über das Reaktionsgemisch geleitet. Anschließend wird das Umsetzungsprodukt mit der oben erwähnten Dieselölfraktion gewaschen, bis die überstehende Lösung kein Titan mehr enthält.

1.2 <u>Mahlen der Komponente A</u>

Die so hergestellte Feststoffsuspension wird in einer kontinuierlich arbeitenden Zahnkolloid-Mühle (Supratron-Mühle 207.25 der Fa. F.J. Zucker KG, Neuss/Rhld) unter Inertgas gemahlen. Da die Höhe der Schüttdichte des Polymerpulvers von der Mahldauer abhängt, wird die Feststoffsuspension 30, 120 und 180 Minuten (Dispersion I, II und III) gemahlen.

1.3 <u>Voraktivierung der Komponente A</u>

500 ml der verschieden lang gemahlenen Dispersion werden bei 20°C mit soviel Aluminiumtriisobutyl bzw. Aluminiumisoprenyl soweit voraktiviert, daß der $Ti^{3+}$-Gehalt in der Dispersion 45 % beträgt.

1.4 <u>Polymerisation</u>

Diese drei verschieden lange gemahlenen Katalysatordispersionen werden in drei Polymerisationsversuchen eingesetzt. In einem 150 ml-Kessel werden jeweils 100 l Dieselöl, 300 mMol Aluminiumtriisobutyl und jeweils 49,0 ml der unter 1.3) genannten Katalysatordispersion gegeben. Anschließend werden bei einer Polymerisationstemperatur von 85°C 5 kg Ethylen pro Stunde und soviel $H_2$ eingeleitet, daß der $H_2$-Gehalt im Gasraum 55 vol-% beträgt. Nach 4 Stunden wird die Polymerisation bei einem Druck von 6 bar durch Entspannen beendet. Die Suspension wird filtriert und das Polyethylenpulver durch Überleiten von heißem $N_2$ getrocknet. Es werden jeweils 20 kg Polyethylen erhalten, was einer Kontaktaktivität von 1 kg Polyethylen/mg-At Ti entspricht. Die Polyethylenpulver besitzen einen MFI 190/5 von 0,5 - 0,75 g/10 min. Die Dichte beträgt 0,955 g/cm$^3$. Die Messung der Schüttdichte ergibt folgende Ergebnisse.

Kontakt-Dispersion   I ( 30 Minuten Mahldauer) 0,33 g/cm$^3$
"              "          II (120  "          "          ) 0,20 g/cm$^3$
"              "          III (180 "          "          ) 0,16 g/cm$^3$

Die Messung der Korngrößenverteilung des mit der Dispersion III hergestellten PE-Pulvers liefert folgendes Ergebnis:

| Korngröße ($\mu$m) | <32 | >32 | >50 | >63 | >100 |
|---|---|---|---|---|---|
| Anteil (%) | 2,2 | 25,1 | 49,2 | 18,7 | 4,8 |

Der mittlere Korndurchmesser ($d_{50}$-Wert) beträgt 62 $\mu$m.

### Beispiel 2

In einem 150 ml-Kessel werden 100 l Dieselöl, 500 mMol Aluminiumtriisobutyl und 112,6 ml der unter Beispiel 1.2 hergestellten Dispersion III vorgelegt. Dann werden bei 85°C 5 kg Ethylen pro Stunde und soviel Wasserstoff eingeleitet, daß der Wasserstoffgehalt im Gasraum 70 Vol.-% beträgt.

Nach 4-stündiger Polymerisation wird entspannt und die Suspension filtriert. Nach dem Trocknen werden 20 kg Polyethylen (ca. 0,5 kg PE/mg-At Ti Kontaktausbeute) erhalten, das einen MFI 190/5 von 18 g/10 Minuten besitzt. Die Dichte beträgt 0,959 g/cm$^3$. Die Schüttdichte liegt bei 0,19 g/cm$^3$. Die Korngrößenverteilung ist eng und ähnelt der im Beispiel 1 angeführten Aufstellung.

### Beispiel 3

In einem 150 l-Kessel werden 100 l Dieselöl, 150 mMol Aluminiumisoprenyl und 28,2 ml der Katalysatordispersion II gegeben. Dann werden bei einer Polymerisationstemperatur von 85°C 5 kg Ethylen pro Stunde eingeleitet.

Nach 4 Stunden wird die Polymerisation beendet und die Suspension filtriert. Nach der Trocknung werden 20 kg Polyethylenpulver erhalten, was einer Katalysatoraktivität von 2 kg PE/mg-At Ti entspricht. Die Viskositätszahl VZ des Polymerisates beträgt 2500 dl/g. Die Messung der Schüttdichte ergibt einen Wert von 0,19 g/cm$^3$. Die Korngrößenverteilung des PE-Pulvers ist eng.

## Beispiel 4

In einem 150 l-Kessel werden 100 l Dieselöl, 300 mMol Aluminiumisoprenyl und 56,4 ml der Katalysatordispersion III gegeben. Danach werden 5 kg Ethylen pro Stunde bei 75$^o$C eingeleitet. Nach 4 Stunden wird die Polymerisation durch Entspannen beendet und nach der Filtration und Trocknung werden 20 kg Polyethylenpulver (ca. 1 kg PE/mg-At Ti) mit der Viskositätszahl VZ von 3550 dl/g erhalten. Die Schüttdichte beträgt 0,17 g/cm$^3$. Wie in den vorhergehenden Beispielen ist die Korngrößenverteilung eng; verglichen mit Beispiel 3 aber nach kleineren Werten verschoben.

## Vergleichsbeispiel A

In einem 150 l-Kessel werden 100 l Dieselöl, 300 mMol Alumindiumtriisobutyl und 73,5 ml der unter Beispiel 1.1. hergestellten nicht gemahlenen Katalysatordispersion gegeben. Danach werden bei einer Polymerisationstemperatur von 85$^o$C 5 kg Ethylen pro Stunde und soviel Wasserstoff eingeleitet, daß im Gasraum 55 Vol.-% $H_2$ gemessen werden. Nach 6 Stunden wird die Polymerisation durch Entspannen beendet und die Suspension filtriert. Nach der Trocknung werden 30 kg Polyethylenpulver erhalten (ca. 1 kg PE/mg-At Ti), das einen MFI 190/5 von 0,8 g/10 min aufweist. Die Messung der Dichte ergibt 0,955 g/cm$^3$. Die Schüttdichte des Polyethylenpulvers beträgt 0,40 g/cm$^3$. Die Korngrößenverteilung wird in nachfolgender Aufstellung wiedergegeben.

Korngröße (µm) <50 > 50 >100 >150 >200 >300 >400
Anteil (%)        0,0  1,8  6,5  26,1  44,5  18,0  3,1

## Beispiel 5

### 5.1 Herstellung der Komponente A

114,3 g Magnesiumethylat werden in einem 3 l Vierhalskolben mit Tropftrichter, KPG-Rührer, Rückflußkühler und Thermometer, in 1,5 l einer Dieselölfraktion unter $N_2$-Überlagerung dispergiert. Zu dieser Dispersion werden innerhalb von 2 h bei 90°C 332 g Titantetrachlorid getropft. Danach wird auf 130°C erwärmt und 60 h bei dieser Temperatur gerührt. Zum Abtreiben gasförmiger Reaktionsprodukte wird während der gesamten Reaktionszeit ein schwacher $N_2$-Strom über das Reaktionsgemisch und anschließend durch eine mit Methanol-Trockeneis gekühlte Kühlfalle geleitet. Nach 60 h ist die Abspaltung von gasförmigen Reaktionsprodukten beendet. In dier Kühlfalle befinden sich 116 g einer wasserklaren Flüssigkeit folgender Zusammensetzung: Cl = 55 Gew.-%, C = 37 Gew.-% und H = 8 Gew.-%. Es handelt sich um Ethylchlorid. Anschließend wird das Umsetzungsprodukt mit der oben erwähnten Dieselölfraktion gewaschen, bis die überstehende Lösung kein Titan mehr enthält.

Nach dem Trocknen hat der Feststoff (Komponente A) folgende analytische Zusammensetzung:

Ti 25,4 Gew.-%

Mg  9,5 Gew.-%

Cl 50,2 Gew.-%

Das Atomverhältnis Cl : Ti beträgt 2,67.

5.2 <u>Mahlen der Komponente A</u>

Die in Beispiel 5.1 hergestellte Komponente A wird vor
der Voraktivierung auf einer Supraton-Mühle der Fa.
Zucker GmbH, Neuss, Rhld., in Suspension unter Inertgas
verschieden lange gemahlen.

Die Mahldauer beträgt 30, 60 und 180 Minuten (Katalysator-Dispersion IV, V und VI).

5.3 <u>Voraktivieren der gemahlenen Komponente A</u>

Die Voraktivierung der gemahlenen Komponente A wird wie
in Beispiel 1.3 vorgenommen.

<u>Beispiel 6</u>

In einem 150 l-Kessel werden 100 l Dieselöl, 100 mMol
Aluminiumtriisobutyl und jeweils 24,5 ml der gemäß Beispiel 5 gemahlenen Dispersionen gegeben. Anschließend werden
bei einer Polymerisationstemperatur von 85$^{\circ}$C 5 kg Ethylen
pro Stunde und soviel $H_2$ eingeleitet, daß der $H_2$-Gehalt
im Gasraum 55 Vol.-% beträgt. Nach 4 Stunden wird die
Polymerisation durch Entspannen beendet. Die Suspension wird
filtriert und das Polyethylenpulver durch Überleiten von
heißem Stickstoff getrocknet. Es werden jeweils ca. 20 kg
Polyethylen erhalten. Dies entspricht einer Katalysatoraktivität von ca. 2,3 kg PE/mg-At Ti. Die Polyethylenpulver
besitzen einen MFI 190/5 von 0,48 - 0,65/10 min. Die Dichte
beträgt jeweils 0,955 g/cm$^3$. Bei der Messung der Schüttdichten der Polyethylenlpulver werden folgende Ergebnisse
erhalten:

|  |  |
|---|---|
| 30 Minuten Mahldauer | 0,31 g/cm$^3$ |
| 120 Minuten Mahldauer | 0,19 g/cm$^3$ |
| 180 Minuten Mahldauer | 0,17 g/cm$^3$ |

Die Korngrößenverteilung des Polyethylenpulvers, das mit dem
180 Minuten lang gemahlenen Katalysator hergestellt wurde,
geht aus folgender Aufstellung hervor:

| Korngröße (µm) | <32 | >32 | >50 | >63 | >100 |
|---|---|---|---|---|---|
| Anteil (%) | 3,0 | 24,0 | 47,5 | 20,0 | 5,5 |

Der mittlere Korndurchmesser ($d_{50}$-Wert) beträgt 57 µm.

Beispiel 7

In einem 150 l-Kessel werden 100 l Dieselöl, 300 mMol Aluminiumtriisobutyl und 56,3 ml der gemäß Beispiel 5 hergestellten Katalysator-Dispersion VI gegeben. Anschließend werden bei einer Polymerisationstemperatur von 85°C 5 kg Ethylen pro Stunde und soviel $H_2$ eingeleitet, daß der $H_2$-Gehalt im Gasraum 70 Vol.-% beträgt. Nach 4-stündiger Polymersation wird entspannt und die Suspension filtriert. Nach dem Trocknen durch Überleiten von heißem Stickstoff werden ca. 20 kg Polyethylenpulver erhalten. Die Katalysatorausbeute beträgt hierbei ca. 1 kg PE/mg-At Ti. Das Polyethylenpulver besitzt einen MFI 190/5 von 20 g/10 min. Die Dichte beträgt 0,960 g/cm$^3$. Die Schüttdichte ist auch hier niedrig und beträgt 0,19 g/cm$^3$. Die Korngrößenverteilung ist eng; im Vergleich mit dem in Beispiel 6 genannten Daten aber zu kleineren Werten verschoben.

Beispiel 8

In einem 150 l-Kessel werden 100 l Dieselöl, 100 mMol Aluminiumisoprenyl und 14,1 ml der 120 Minuten lang gemahlenen, aber mit Aluminiumisoprenyl wie in Beispiel 5 voraktivierten Katalysatordispersion vorgelegt. Bei einer Polymerisationstemperatur von 85°C werden 5 kg Ethylen pro Stunde eingeleitet. Nach 4 Stunden wird die Polymerisation durch Entspannen beendet und die Suspension filtriert. Nach dem Trocknen werden 20 kg Polyethylenpulver erhalten, was einer Katalysatoraktivität von ca. 4 kg PE/mg At Ti entspricht. Die Viskositätszahl VZ des Polymerisates beträgt 2400 dl/g. Die Messung der Schüttdichte ergibt einen Wert von 0,19 g/cm$^3$.

Die Korngrößenverteilung ist eng verglichen mit der von Beispiel 6 jedoch nach größeren Werten verschoben.

### Beispiel 9

In einem 150 l-Kessel werden 100 l Dieselöl, 100 mMol Aluminiumisoprenyl und 28,2 ml der 180 Minuten gemahlenen, aber mit Aluminiumisoprenyl, wie in Beispiel 5 angegeben, voraktivierten Katalysatordispersion gegeben. Anschließend werden bei einer Polymerisationstemperatur von 75$^\circ$C 5 kg Ethylen pro Stunde eingeleitet. Nach 4 Stunden wird entspannt und die Suspension filtriert. Nach dem Trocknen werden ca. 20 kg Polyethylen erhalten, was einer Katalysatoraktivität von ca. 2 kg PE/mg At Ti entspricht. Die Viskositätszahl VZ des Polymeren beträgt 3400 dl/g. Die Schüttdichte erreicht den Wert von 0,17 g/cm$^3$. Wie in den vorhergehenden Beispielen ist die Korngrößenverteilung eng; verglichen mit dem Beispiel 6 aber nach kleineren Werten versetzt.

### Beispiel 10

In einem 150 l-Kessel werden 100 l Dieselöl, 150 mMol Aluminiumtriisobutyl und 24,5 mMol der gemäß Beispiel 5 hergestellten Katalysatordispersion VI gegeben. Dann werden 5 kg Ethylen pro Stunde und soviel $H_2$ eingeleitet, daß der $H_2$-Gehalt im Gasraum 45 Vol.-% beträgt. Während der Polymerisation werden während der ersten 4 Stunden gleichmäßig 1200 ml Buten(-1) eindosiert. Nach 4 Stunden wird die Polymerisation durch Entspannen beendet, die Suspension filtriert und das Polymerisat getrocknet. Es werden ca. 21 kg Polyethylen mit dem MFI 190/5 von 1,0 g/10 min erhalten, das eine Dichte von 0,946 und eine Schüttdichte von 0,15 g/cm$^3$ hat. Die Korngrößenverteilung des PE-Pulvers ähnelt der des Beispiels 6.

## Vergleichsbeispiel B

In einem 150 l-Kessel werden 100 l Dieselöl, 150 mMol Aluminiumtriisobutyl und 36,7 ml der im Beispiel 5.1 beschriebenen ungemahlenen Dispersion gegeben. Anschließend werden bei einer Polymerisationstemperatur von 85°C 5 kg Ethylen pro Stunde und soviel $H_2$ eingeleitet, daß der $H_2$-Gehalt im Gasraum 55 Vol.-% beträgt. Nach 6 Sunden wird die Polymerisation bei einem Druck von 6 bar durch Entspannen beendet. Die Suspension wird filtriert und das Polyethylenpulver durch Überleiten von heißem Stickstoff getrocknet. Es werden ca. 30 kg Polyethylen erhalten. Dies entspricht einer Kontaktaktivität von 2,3 kg PE/mg-At Ti. Das Polyethylenpulver besitzt einen MFI 190/5 von 0,54 g/10 min. Die Dichte ist 0,955 g/cm$^3$ und die Schüttdichte beträgt 0,44 g/cm$^3$. Die Korngrößenverteilung geht aus nachfolgender Aufstellung hervor:

| Korngröße (μm) | <50 | >50 | >100 | >150 | >200 | >300 | >400 |
|---|---|---|---|---|---|---|---|
| Anteil (%) | 0,0 | 2,1 | 6,2 | 27,9 | 45,5 | 16,5 | 1,8 |

## Beispiel 11

### 11.1 Herstellung der Komponente A

142,5 g Magnesium-n-propylat werden einem 3 l Vierhalskolben, versehen mit Tropftrichter, KPG-Rührer, Rückflußkühler und Thermometer, in 1,5 l Dieselölfraktion unter $N_2$-Überlagerung dispergiert. Zu dieser Dispersion werden bei 85°C 275 ml = 2,5 Mol TiCl$_4$ innerhalb von 4 Stunden eindosiert. Nach der TiCl$_4$-Zugabe wird noch eine halbe Stunde bei 85°C nachgerührt und der resultierende Feststoff mit der Dieselölfraktion so lange gewaschen, bis keine löslichen Titanverbindungen mehr nachweisbar sind.

Die so erhaltene Dispersion wird dann mit 55 ml TiCl$_4$ einer 60 stündigen Temperaturbehandlung bei 120°C unterzogen und dann in einer zweiten Kohlenwasserstoffwäsche von löslichen Titanverbindungen befreit.

11.2 <u>Mahlen der Komponente A</u>

Die so hergestellte Katalysatordispersion wird mit Hilfe eines R-ULTRATURRAX der Fa. Janke und Kunkel 5, 10 und 20 Minuten unter Inertgas gemahlen, so daß hier wieder 3 Katalysatordispersionen, VII, VIII und IX resultieren.

11.3 <u>Voraktivierung der gemahlenen Katalysatordispersion</u>

Die Voraktivierung der gemahlenen Katalysatordispersionen erfolgt in der gleichen Weise wie in Beispiel 1.3 beschriebenen.

<u>Beispiel 12</u>

In einem 150 1-Kessel werden 100 1 Dieselöl, 100 mMol Aluminiumtriisobutyl und 7,0 ml der Dispersion IX vorgelegt. Bei 85°C werden 5 kg Ethylen pro Stunde und soviel $H_2$ eingeleitet, daß 45 % Wasserstoff in der Gasphase vorhanden sind. Nach 4 stündiger Polymerisation wird bei 6 bar die Polymerisation beendet, die Suspension filtriert und das dabei erhaltene Pulver getrocknet. Es werden 20 kg Polyethylen (8 kg PE/mg-At. Ti) mit einem MFI 190/5 von 0,6 g/10 min erhalten; die Dichte beträgt 0,956 g/cm$^3$, die Schüttdichte 0,20 g/cm$^3$. Bei der Messung der Korngrößenverteilung werden folgende Werte ermittelt:

| Korngröße (µm) | <32 | >32 | >50 | >63 | >100 |
|---|---|---|---|---|---|
| Anteil (%) | 2,6 | 28,5 | 51,8 | 14,6 | 2,5 |

<u>Beispiel 13</u>

In einem 150 1-Kessel werden 100 1 Dieselöl, 100 mMol Aluminiumisoprenyl und 3,5 ml der Dispersion IX gegeben. Bei der Polymerisationstemperatur von 85°C werden pro Stunde 5 kg Ethylen und 100 ml Buten-1 eingeleitet. Nach 4 Stunden wird die Polymerisation durch Entspannen beendet. Nach der Filtration und Trocknung werden 20 kg Polyethylenpulver erhalten, was einer Katalysatoraktivität von 16 kg PE/mg-At Ti entspricht. Die Viskositätszahl VZ des Polymeren beträgt 2000 dl/g, die Schüttdichte 0,20 g/cm$^3$.

Die Korngrößenverteilung geht aus nachfolgender Aufstellung hervor:

| Korngröße (µm) | <32 | >32 | >50 | >63 | >100 |
|---|---|---|---|---|---|
| Anteil (%) | 1,8 | 30,5 | 49,5 | 13,0 | 5,2 |

Vergleichsbeispiel C

In einem 150 l-Kessel werden 100 l Dieselöl und 10,5 ml der nicht gemahlenen Katalysatordispersion gemäß Beispiel 20.1 gegeben. Anschließend werden 5 kg Ethylen pro Stunde und soviel Wasserstoff eingeleitet, daß im Gasraum 45 Vol.-% $H_2$ gemessen werden. Nach 4 Stunden wird die Polymerisation durch Entspannen beendet und man erhält nach Filtration und Trocknung 20 kg Polyethylenpulver (8 kg PE/mg-At Ti). Der MFI 190/5 des Pulvers beträgt 0,55 g/10 min, die Dichte 0,956 g/cm$^3$. Bei der Messung der Schüttdichte wird der Wert von 0,40 ermittelt. Die Korngrößenverteilung des Polyethylenpulvers geht aus folgender Aufstellung hervor:

| Korngröße (µm) | <50 | >50 | >100 | >150 | >200 | >300 | >400 |
|---|---|---|---|---|---|---|---|
| Anteil (%) | 0,0 | 3,0 | 5,8 | 24,9 | 44,1 | 18,7 | 3,5 |

Aus den Ergebnissen ist ersichtlich, daß das Mahlen des Katalysators nur eine Änderung der Morphologie des Polyethylenpulvers bewirkt. Polymerisationsaktivität, Wasserstoffansprechbarkeit des Katalysators und Dichte des Polyethylens bleiben unverändert. Wie die Pulverdaten zeigen, wird das Ziel der Absenkung der Schüttdichte und die Forderung nach einer engen Korngrößenverteilung des Polyethylenpulvers durch die gezielte Maßnahme des Mahlens des Katalysators in Suspension erreicht.

Patentansprüche

1. Verfahren zur Herstellung einer Katalysatorkomponente für die Polymerisation und Copolymerisation von 1-Olefinen aus dem festen Produkt der Umsetzung von Magnesiumalkoholaten mit TiCl$_4$, dadurch gekennzeichnet, daß das mit einem Kohlenwasserstoff gewaschene feste Umsetzungsprodukt einer Scherbehandlung ausgesetzt wird.

2. Verfahren nach Anspruch 1, dadurch gekennzeichnet, daß ein Umsetzungsprodukt, welches in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, das gebildete Reaktionsgemisch in einer zweiten Reaktionsstufe bei einer Temperatur von 110 bis 200°C einer thermischen Behandlung unterworfen wurde, bis keine Alkylchloridabspaltung mehr erfolgte, und danach der Feststoff durch mehrmaliges Waschen mit einem Kohlenwasserstoff von löslichen Reaktionsprodukten befreit wurde, einer Scherbehandlung ausgesetzt wird.

3. Verfahren nach Anspruch 1, dadurch gekennzeichnet, daß ein Umsetzungsprodukt, welches in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200°C unter Zusatz eines Chloralkoxytitanats einer thermischen Behandlung unterworfen wurde, bis keine Alkylchloridabspaltung mehr erfolgte, und danach der Feststoff durch mehrmaliges Waschen mit einem Kohlenwasserstoff von löslichen Reaktionsprodukten befreit wurde, einer Scherbehandlung ausgesetzt wird.

4. Verfahren nach Anspruch 1, dadurch gekennzeichnet, daß ein Umsetzungsprodukt, welches in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200°C unter Zusatz von $TiCl_4$ 8 bis 100 Stunden einer thermischen Behandlung unterworfen wurde, und danach der Feststoff durch mehrmaliges Waschen mit einem Kohlenwasserstoff von löslichen Reaktionsprodukten befreitwurde, einer Scherbehandlung ausgesetzt wird.

5. Verwendung der nach Anspruch 1 hergestellten Katalysatorkomponente zusammen mit einer metallorganischen Verbindung der Gruppen I bis III des Periodensystems zum Polymerisieren und Copolymerisieren von 1-Olefinen zu feinteiligen Polymerisaten mit niedriger Schüttdichte.

6. Verfahren zur Polymerisation von 1-Olefinen der Formel $R^4-CH=CH_2$, in der $R^4$ Wasserstoff oder einen Alkylrest mit 1 bis 10 Kohlenstoffatomen bedeutet, in Gegenwart eines Katalysators, der aus einer magnesium- und titanhaltigen Komponente (Komponente A) und einer metallorganischen Verbindung der Gruppe I bis III des Periodensystems (Komponente B) besteht, dadurch gekennzeichnet, daß man in Gegenwart eines Katalysators polymerisiert, dessen Komponente A in der Weise hergestellt wurde, daß das mit einem Kohlenwasserstoff gewaschene feste Produkt der Umsetzung von Magnesiumalkoholaten mit $TiCl_4$ einer Scherbehandlung ausgesetzt wurde.

7. Verfahren zur Polymerisation eines 1-Olefins der Formel $R^4CH=CH_2$, in der $R^4$ Wasserstoff oder einen Alkylrest mit 1 bis 10 Kohlenstoffatomen bedeutet, in Gegenwart eines Katalysators, der aus dem Umsetzungsprodukt eines Magnesiumalkoholats mit Titantetrachlorid (Komponente A) und einer metallorganischen Verbindung der Gruppe I bis III des Periodensystems (Komponente B) besteht, dadurch gekennzeichnet, daß man in Gegenwart eines Katalysators polymerisiert, dessen Komponente A in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, das gebildete Reaktionsgemisch in einer zweiten Reaktionsstufe bei einer Temperatur von 110 bis 200°C einer thermischen Behandlung unterworfen wurde, bis keine Alkylchloridabspaltung mehr erfolgte, und danach der Feststoff durch mehrmaliges Waschen mit einem Kohlenwasserstoff von löslichen Reaktionsprodukten befreit und einer Scherbehandlung ausgesetzt wurde.

8. Verfahren zur Polymerisation von 1-Olefinen der Formel $R^4-CH=CH_2$, in der $R^4$ Wasserstoff oder einen Alkylrest mit 1 bis 10 Kohlenstoffatomen bedeutet, in Gegenwart eines Katalysators, der aus einer magnesium- und titanhaltigen Komponente (Komponente A) und einer metallorganischen Verbindung der Gruppe I bis III des Periodensystems (Komponente B) besteht, dadurch gekennzeichnet, daß man in Gegenwart eines Katalysators polymerisiert, dessen Komponente A in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200°C unter Zusatz eines Choralkoxytitanats einer thermischen Behandlung unterworfen wurde, bis keine Alkylchloridabspaltung mehr erfolgte, und danach der Feststoff durch mehrmaliges Waschen mit einem Kohlenwasserstoff von löslichen Reaktionsprodukten befreit und einer Scherbehandlung ausgesetzt wurde.

9. Verfahren zur Polymerisation eines 1-Olefins der Formel $R^4CH=CH_2$, in der $R^4$ Wasserstoff oder einen Alkylrest mit 1 bis 10 Kohlenstoffatomen bedeutet, in Gegenwart eines Katalysators, der aus dem Umsetzungsprodukt eines Magnesiumalkoholats mit Titantetrachlorid (Komponente A) und einer metallorganischen Verbindung der Gruppe I bis III des Periodensystems (Komponente B) besteht, dadurch gekennzeichnet, daß man in Gegenwart eines Katalysators polymerisiert, dessen Komponente A in der Weise hergestellt wurde, daß in einer ersten Reaktionsstufe ein Magnesiumalkoholat mit Titantetrachlorid in einem Kohlenwasserstoff bei einer Temperatur von 50 bis 100°C umgesetzt wurde, anschließend die löslichen Bestandteile durch Waschen mit einem Kohlenwasserstoff abgetrennt wurden, der erhaltene Feststoff in einem Kohlenwasserstoff suspendiert und in einer zweiten Reaktionsstufe bei einer Temperatur von 110 bis 200°C unter Zusatz von $TiCl_4$ 8 bis 100 Stunden einer thermischen Behandlung unterworfen wurde, und danach der Feststoff durch mehrmaliges Waschen mit einem Kohlenwasserstoff von löslichen Reaktionsprodukten befreit und einer Scherbehandlung ausgesetzt wurde.

# EUROPÄISCHER RECHERCHENBERICHT

**Europäisches Patentamt**

**0095138**
Nummer der Anmeldung

EP 83 10 4902

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | CHEMICAL ABSTRACTS, Band 88, Nr. 6, 6. Februar 1978, Seite 14, Nr. 38333r, Columbus, Ohio, USA & JP - A - 77 98076 (MITSUBISHI CHEMICAL INDUSTRIES CO., LTD.) 17.08.1977 * Zusammenfassung * | 1,5,6 | C 08 F 10/00 C 08 F 4/64 |
| | --- | | |
| X | DE-A-2 729 196 (MITSUI) * Ansprüche 1,2,5-7,10; Seite 14, letzter Absatz - Seite 16, Zeile 20 * | 1,5,6 | |
| | --- | | |
| D,Y | DE-A-2 000 566 (HOECHST) * Ansprüche 1-6; Seite 7, Zeilen 1-15 * | 1,5 | |
| | --- | | |
| Y | DE-A-1 958 488 (MONTECATINI-EDISON) * Ansprüche 1,3,4,10,11 * | 1,5 | **RECHERCHIERTE SACHGEBIETE (Int. Cl. ³)** |
| | ----- | | C 08 F |

Der vorliegende Recherchenbericht wurde für alle Patentansprüche erstellt.

| Recherchenort DEN HAAG | Abschlußdatum der Recherche 07-09-1983 | Prüfer WEBER H. |
|---|---|---|